# EUROPEAN PATENT SPECIFICATION

(11) **EP 3 162 530 B1**
(45) Date of publication and mention of the grant of the patent: **06.01.2021**
(21) Application number: 16193014.4
(22) Date of filing: 10.10.2016
(51) Int. Cl.: B29C 45/66, B29C 45/40, B29C 45/50, F16H 25/24, F16H 25/22

(54) **INJECTION MOLDING MACHINE**
SPRITZGIESSMASCHINE
MACHINE DE MOULAGE À INJECTION

(30) Priority: 30.10.2015 JP 2015215190
(43) Date of publication of application: 03.05.2017
(73) Proprietor: SUMITOMO HEAVY INDUSTRIES, LTD., Tokyo 141-6025 (JP)
(72) Inventor: ISHII, Yoshihisa, Chiba-shi, Chiba 263-0001 (JP)
(74) Representative: Louis Pöhlau Lohrentz

(56) References cited:
- EP-A1- 1 057 569
- CN-U- 202 963 292
- JP-A- S59 113 361
- JP-A- 2006 007 336
- JP-A- 2008 064 207

## Description

### BACKGROUND OF THE INVENTION

### Field of the Invention

Certain embodiments of the present invention relates to an injection molding machine.

### Description of Related Art

An injection molding machine includes a mold clamping unit which performs mold-closing, mold-clamping, and mold-opening of a mold unit. The mold clamping unit includes a mold clamping motor, a ball screw which is rotationally driven by the mold clamping motor, and a crosshead which is vertically moved by the rotation of the ball screw (for example, refer to Japanese Unexamined Patent Application Publication No. 7-88922 (Fig. 1)).

Chinese Utility Model CN202963292 discloses a rotary wheel that is screwed onto the end of a rotary wheel shaft.

Japanese Patent document JPS59113361 discloses a plug for an oil hole in a screw shaft.

Japanese Patent document JP2008064207 discloses a seal member in the end face of which a bottomed rotation hole is provided.

### SUMMARY OF THE INVENTION

The present invention is made in consideration of the above-described circumstances, and a main object thereof is to provide an injection molding machine in which the overall length can be decreased.

In order to achieve the above-described object, according to an aspect of the present invention, there is provided an injection molding machine, including: a motor; and a movement conversion mechanism which converts rotational motion of the motor into linear motion, in which the movement conversion mechanism includes a ball screw shaft and a ball screw nut which is screwed to the ball screw shaft, and the ball screw shaft is rotated by the motor, wherein the ball screw shaft includes a rotation prevention portion, which includes a recessed portion and which is used to prevent rotation of the ball screw shaft when the movement conversion mechanism is assembled, and the rotation prevent portion is located on an axial end surface of an axial end portion of the ball screw shaft, which axial end portion serves as an attachment portion.

According to the aspect of the present invention, an injection molding machine in which the overall length can be decreased is provided.

### BRIEF DESCRIPTION OF THE DRAWINGS

Fig. 1 is a view showing a state when mold opening of an injection molding machine according to an embodiment is completed.
Fig. 2 is a view showing a state when a mold of the injection molding machine according to the embodiment is clamped.
Fig. 3 is a view showing a main portion of a movement conversion mechanism according to the embodiment.
Fig. 4 is a view showing a state when rotation of a ball screw shaft of Fig. 3 is prevented.
Fig. 5 is a view showing a state when rotation of a ball screw shaft according to a modification example is prevented.

### DETAILED DESCRIPTION OF THE INVENTION

Hereinafter, an embodiment of the present invention is described with reference to the drawings. However, in each drawing, the same or corresponding reference numerals are assigned to the same or corresponding configurations, and descriptions thereof are omitted.

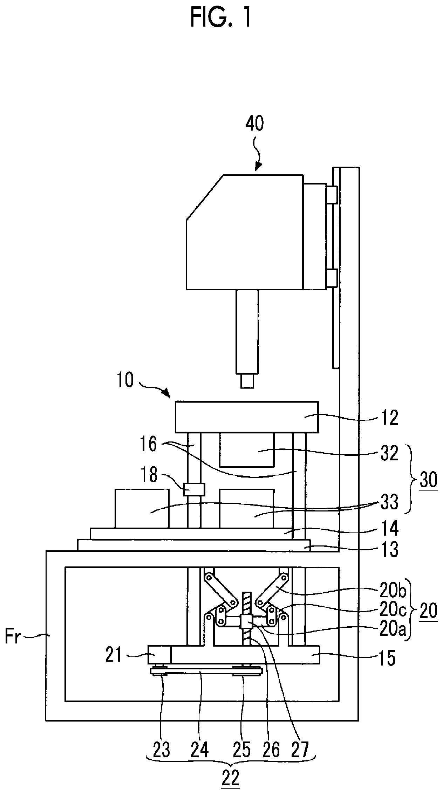

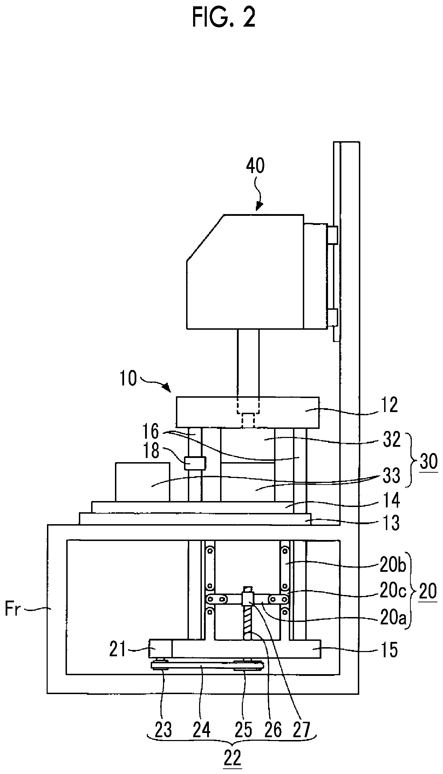

Fig. 1 is a view showing a state when mold opening of an injection molding machine according to an embodiment is completed. Fig. 2 is a view showing a state when a mold of the injection molding machine according to the embodiment is clamped. As shown in Figs. 1 and 2, the injection molding machine includes a mold clamping unit 10 and an injection unit 40.

The mold clamping unit 10 performs mold-closing, mold-clamping, and mold-opening of a mold unit 30. For example, the mold unit 30 includes an upper mold 32 and a lower mold 33. The mold clamping unit 10 includes an upper platen 12, a lower platen 13, a rotary table 14, a toggle support 15, a tie bar 16, a toggle mechanism 20, a mold clamping motor 21, and a movement conversion mechanism 22.

The upper platen 12 can be freely lifted and lowered above the lower platen 13. The upper mold 32 is attached to a surface (lower surface) of the upper platen 12 facing the lower platen 13.

The lower platen 13 is disposed below the upper platen 12 and is fixed to a frame Fr. The multiple lower molds 33 are attached to a surface (upper surface) of the lower platen 13 facing the upper platen 12 via the rotary table 14.

The rotary table 14 rotates by 180°, and moves between a position at which the lower mold 33 faces the upper mold 32 and a position at which a molding product is extracted. The position at which the molding product is extracted may be a preparation position at which an insert member is set to the lower mold 33.

In addition, the lower mold 33 of the present embodiment is attached to the lower platen 13 via the rotary table 14. However, the lower mold 33 may be directly attached to the lower platen 13. In addition, the number of the lower molds 33 is not limited to two, and may be one, or three or more.

The toggle support 15 can be freely lifted and lowered below the lower platen 13, and is connected to the upper platen 12. The upper platen 12 is lifted and lowered according to the lifting and lowering of the toggle support 15.

The tie bar 16 penetrates the lower platen 13, and connects the upper platen 12 and the toggle support 15. Multiple tie bars 16 may be used. Respective tie bars 16 are parallel to each other in a mold opening-closing direction, and extend according to a mold clamping force.

A mold clamping force detector 18 is provided on at least one tie bar 16. The mold clamping force detector 18 may be a strain gauge type detector, and detects the mold clamping force by detecting of strain of the tie bar 16.

In addition, the mold clamping force detector 18 is not limited to the strain gauge type detector, and may be a piezoelectric type detector, a capacitance type detector, a hydraulic type detector, an electromagnetic type detector, or the like, and the attachment position of the mold clamping force detector 18 is also not limited to the tie bar 16. In addition, the mold clamping force detector 18 may not be provided.

The toggle mechanism 20 is provided between the lower platen 13 and the toggle support 15, and lifts and lowers the toggle support 15 with respect to the lower platen 13. The toggle mechanism 20 includes a crosshead 20a, multiple links 20b and 20c, or the like. One link 20b is attached so as to be freely oscillated to the lower platen 13, and the other link 20c is attached so as to be freely oscillated to the toggle support 15. The links 20b and 20c are bendably/strechably connected by pins or the like.

The mold clamping motor 21 operates the toggle mechanism 20. The mold clamping motor 21 lifts and lowers the crosshead 20a so as to bend and stretch the multiple links 20b and 20c. Accordingly, the toggle support 15 and the upper platen 12 are lifted and lowered. The movement conversion mechanism 22 which converts rotational motion of the mold clamping motor 21 to linear motion of the crosshead 20a is disposed between the mold clamping motor 21 and the crosshead 20a.

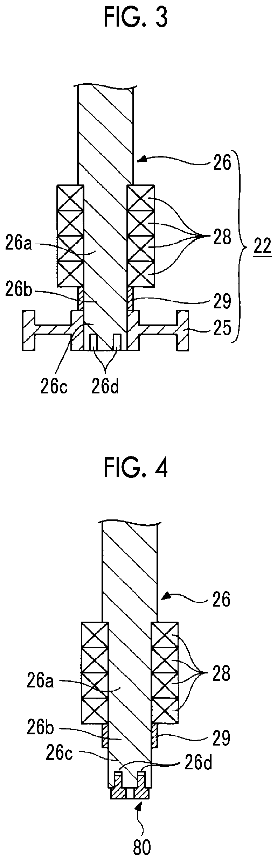

For example, the movement conversion mechanism 22 includes a drive pulley 23, an endless belt 24, a driven pulley 25, a ball screw shaft 26, and a ball screw nut 27. The drive pulley 23 is attached to an output shaft of the mold clamping motor 21, and rotates along with the output shaft. The endless belt 24 is suspended to the drive pulley 23 and the driven pulley 25. The driven pulley 25 is attached to an axial end portion of the ball screw shaft 26. The ball screw shaft 26 is rotatably supported by a bearing 28 (refer to Fig. 3) held by the toggle support 15 and the ball screw shaft 26 rotates along with the driven pulley 25. The drive pulley 23, the endless belt 24, and the driven pulley 25 transmit the rotational motion of the mold clamping motor 21 to the ball screw shaft 26. The ball screw nut 27 is screwed to the ball screw shaft 26 and is fixed to the crosshead 20a. Since the rotational motion of the ball screw shaft 26 is converted to the linear motion of the ball screw nut 27, the crosshead 20a is lifted and lowered.

The operation of the mold clamping unit 10 is controlled by a controller. The controller is configured of a computer or the like. The controller controls a mold closing process, a mold clamping process, and a mold opening process.

In the mold closing process, by driving the mold clamping motor 21 and lowering the upper platen 12, the upper mold 32 comes into contact with the lower mold 33.

In the mold clamping process, a mold clamping force is generated by further driving the mold clamping motor 21. When the mold is clamped, a cavity space is formed between the upper mold 32 and the lower mold 33, and the cavity space is filled with a liquid molding material. The molding material filling the cavity space is solidified to obtain a molding product.

In the mold opening process, the upper mold 32 is separated from the lower mold 33 by driving the mold clamping motor 21 and lifting the upper platen 12.

The injection unit 40 is freely lifted and lowered along a guide which is formed on the frame Fr. The injection unit 40 is touched to the mold unit 30, and the inside of the mold unit 30 is filled with a molding material. Similarly to the operation of the mold clamping unit 10, the operation of the injection unit 40 is controlled by the controller.

Fig. 3 is a view showing a main portion of the movement conversion mechanism according to the embodiment. As shown in Fig. 3, the movement conversion mechanism 22 includes the driven pulley 25, the ball screw shaft 26, the bearing 28, a bearing nut 29, or the like.

The bearing nut 29 is screwed to the ball screw shaft 26, and limits an axial movement of the bearing 28 with respect to the ball screw shaft 26. The bearing 28 is interposed between a stepped portion formed on the outer circumference of the ball screw shaft 26 and the bearing nut 29.

The ball screw shaft 26 includes a bearing attachment portion 26a, a bearing nut attachment portion 26b, and a driven pulley attachment portion 26c in this order on the axial end portion from the axial inner side toward the axial outer side. The bearing 28 is attached to the bearing attachment portion 26a, the bearing nut 29 is attached to the bearing nut attachment portion 26b, and the driven pulley 25 is attached to the driven pulley attachment portion 26c.

Fig. 4 is a view showing a state when rotation of the ball screw shaft of Fig. 3 is prevented. The ball screw shaft 26 includes a rotation prevention portion 26d, which is used to prevent the rotation of the ball screw shaft 26, on the axial end surface. The rotation prevention portion 26d includes a recessed portion to which a rotation prevention tool 80 may be hooked.

As the rotation prevention tool 80, a hook wrench or the like is used. For example, the hook wrench is divided into two legs from the intermediate portion, and includes a pin on each divided distal portion. Two pins are fitted to two recessed portions, and the rotation of the ball screw shaft 26 is prevented.

In addition, the rotation prevention tool 80 is not limited to the hook wrench. For example, the rotation prevention tool 80 may be a hexagonal bar wrench, and in this case, the number of the recessed portions of the rotation prevention portion 26d may be one. The number, the position, or the shape of the recessed portions is appropriately selected according to the kind of the rotation prevention tool 80 or the like.

In addition, the recessed portion of the rotation prevention portion 26d is a hole in which screw grooves are not formed. However, the recessed portion may be a tapped hole in which screw grooves are formed. In a case where the recessed portion is a tapped hole, the rotation prevention tool 80 may be screwed to the ball screw shaft 26.

According to the present embodiment, the rotation prevention portion 26d is formed on the axial end surface of the ball screw shaft 26. Accordingly, unlike the case of the related art in which the width-across flat surface is formed on the outer circumference of the axial end portion of the ball screw shaft 26, since a dedicated portion for preventing rotation is not required, it is possible to decrease the overall length of the ball screw shaft 26, and it is possible to decrease the overall length of the injection molding machine.

The rotation prevention portion 26d is formed on the end surface of the driven pulley attachment portion 26c. Accordingly, it is possible to attach the driven pulley 25 to the outer circumference of the driven pulley attachment portion 26c. When the attachment of the driven pulley 25 is completed, the ball screw shaft 26 may not protrude from the side opposite to the bearing nut 29 based on the driven pulley 25. Itispossible to decrease the overall length of the injection molding machine.

The rotation prevention portion 26d is used when the movement conversion mechanism 22 is assembled, and for example, may be used when the bearing nut 29 is attached to the ball screw shaft 26. In a state where the rotation of the ball screw shaft 26 is prevented by the rotation prevention tool 80, it is possible to rotate the bearing nut 29 screwed to the ball screw shaft 26, and it is possible to fasten the bearing 28 by the bearing nut 29.

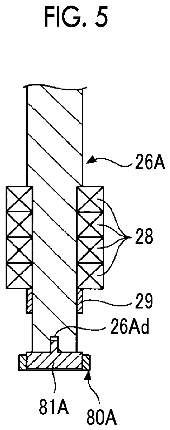

Fig. 5 is a view showing a state when rotation of a ball screw shaft according to a modification example is prevented. A ball screw shaft 26A of the present modification example is used instead of the ball screw shaft 26 of the above-described embodiment.

The ball screw shaft 26A includes a rotation prevention portion 26Ad, which is used to prevent the rotation of the ball screw shaft 26A, on the axial end surface. For example, the rotation prevention portion 26Ad includes a recessed portion to which an adaptor member 81A, to which a rotation prevention tool 80A is hooked, is attached. The recessed portion may be a tapped hole.

For example, the adaptor member 81A may be a hexagonal bolt having width-across flat surfaces on the outer circumference of a head portion of the adaptor member 81A. The screw shaft portion of the hexagonal bolt is screwed to the tapped hole serving as the rotation prevention portion 26Ad, and the rotation of the head portion of the hexagonal bolt is prevented by the rotation prevention tool 80A such as an open-end wrench or a box end wrench. Accordingly, the rotation of the ball screw shaft 2 6A is prevented. Thereafter, the adaptor member 81A is removed from the ball screw shaft 26A. Therefore, it is possible to decrease the overall length of the ball screw shaft 26A, and it is possible to decrease the overall length of the injection molding machine.

In addition, the adaptor member 81A is not limited to a member which includes the width-across flat surfaces on the outer circumference thereof. For example, in a state where the adaptor member 81A is attached to the ball screw shaft 26A, the adaptor member 81A may include a recessedportion on an end surface opposite to the ball screw shaft 26A. Since the hexagonal bar wrench, a hook wrench, or the like is hooked to the recessed portion of the adaptor member 81A, the rotation of the adaptor member 81A is prevented.

In addition, the recessed portion of the rotation prevention portion 26Ad of the present modification example is a tapped hole in which the screw grooves are formed. However, the recessed portion may be a hole in which screw grooves are not formed. The recessed portion may be any portion as long as the rotation prevention tool 80A is hooked to the adaptor member 81A and the rotation of the ball screw shaft 26A can be prevented.

Hereinbefore, the embodiment and the modification example of the injection molding machine are described. However, the present invention is not limited to the above-described embodiment, the above-described modification example, or the like. Various modifications and improvement may be applied to the present invention within the scope which does not depart from the scope of the present invention described in claims.

For example, the mold clamping unit 10 of the embodiment is a vertical type mold clamping unit in which the mold opening-closing direction is the vertical direction. However, the mold clamping unit 10 may be a horizontal type mold clamping unit in which the mold opening-closing direction is the horizontal direction. For example, the horizontal type mold clamping unit includes a stationary platen, a movable platen, a toggle support, a toggle mechanism, tie bars, a mold clamping motor, or the like. A stationary mold is attached to the stationary platen, and a movable mold is attached to the movable platen. A mold unit is configured of the stationary mold and the movable mold. The toggle support is disposed on the side opposite to the stationary platen based on the movable platen. The tie bars are parallel to each other in the horizontal direction, and connect the stationary platen and the toggle support. The toggle mechanism is disposed between the movable platen and the toggle support, and moves the movable platen with respect to the toggle support. The movement conversion mechanism which converts the rotational motion of the mold clamping motor to the linear motion of the crosshead is disposed between the crosshead of the toggle mechanism and the mold clamping motor. The ball screw shaft included in the movement conversion mechanism may include the rotation prevention portion 26d shown in Figs. 3 to 4 or the rotation prevention portion 26Ad shown in Fig. 5 on the axial end surface thereof.

The movement conversion mechanism 22 of the above-described embodiment includes the drive pulley 23, the endless belt 24, the driven pulley 25, the ball screw shaft 26, the ball screw nut 27, the bearing 28, and the bearing nut 29. However, the structure of the movement conversion mechanism 22 is not particularly limited. The movement conversion mechanism 22 may include at least the ball screw shaft 26 and the ball screw nut 27. This is similarly applied to the modification example.

For example, in Figs. 1 and 2, the center line of the mold clamping motor 21 is deviated from the center line of the ball screw shaft 26. However, the center line of the mold clamping motor 21 coincides with the center line of the ball screw shaft 26. In the latter case, the rotational motion of the mold clamping motor 21 is transmitted to the ball screw shaft 26 via a coupling or the like instead of the drive pulley 23, the endless belt 24, and the driven pulley 25. The output shaft of the mold clamping motor 21 and the ball screw shaft 26 are connected to each other by the coupling. The ball screw shaft 26 includes a coupling attachment portion to which the coupling instead of the driven pulley 25 is attached to the axial end portion. A rotation prevention portion is formed on the end surface of the coupling attachment portion.

The movement conversion mechanism 22 of the embodiment converts the rotational motion of the mold clamping motor mounted on the mold clamping unit 10 to the linear motion. The motor, which performs the rotational motion which is converted to the linear motion by the movement conversion mechanism 22, is not limited to the mold clamping motor. For example, the motor may be an injection motor described below which is mounted on the injection unit 40, an ejector motor described below which is mounted on the ejector unit, or the like.

The inside of the mold unit 30 is filled with the molding material by the injection unit 40. The injection unit includes a plasticizing cylinder which heats the molding material supplied to the inside of the mold unit, a feeder member which is disposed to freely move forward and backward inside the plasticizing cylinder and feeds the molding material to the outside of the plasticizing cylinder, and an injection motor which moves the feeder member forward and backward. As the feeder member, a screw, a plunger, or the like is used. The movement conversion mechanism which converts the rotational motion of the injection motor to the linear motion of the feeder member is provided between the feeder member and the injection motor. The ball screw shaft included in the movement conversion mechanism may include the rotation prevention portion 26d shown in Figs. 3 and 4, and the rotation prevention portion 26Ad shown in Fig. 5 on the axial end surface.

The ejector unit ejects a molding product from the mold unit. The ejector unit includes an ejector rod which presses a movable member disposed to freely move forward and backward inside the mold unit, and an ejector motor which moves the ejector rod forward and backward. The movement conversion mechanism which converts the rotational motion of the ejector motor to the linear motion of the ejector rod is provided between the ejector rod and the ejector motor. The ball screw shaft included in the movement conversion mechanism may include the rotation prevention portion 26d shown in Figs. 3 to 4 or the rotation prevention portion 26Ad shown in Fig. 5 on the axial end surface thereof.

### Brief Description of the Reference Symbols

- 10:: mold clamping unit
- 12:: upper platen
- 13:: lower platen
- 15:: toggle support
- 16:: tie bar
- 20:: toggle mechanism
- 20a:: crosshead
- 20b:: link
- 20c:: link
- 21:: mold clamping motor
- 22:: movement conversion mechanism
- 26:: ball screw shaft
- 27:: ball screw nut
- 30:: mold unit
- 32:: upper mold
- 33:: lower mold

## Claims

1. An injection molding machine, comprising:
a motor; and
a movement conversion mechanism (22) which converts rotational motion of the motor into linear motion,
wherein the movement conversion mechanism (22) includes a ball screw shaft (26) and a ball screw nut (27) which is screwed to the ball screw shaft (26),
wherein the ball screw shaft (26) is rotated by the motor;
**characterized in that** the ball screw shaft (26) includes a rotation prevention portion (26d), which includes a recessed portion and which is is configured to be used to prevent rotation of the ball screw shaft (26) when the movement conversion mechanism is assembled,
wherein the rotation prevention portion (26d) is located on an axial end surface of an axial end portion of the ball screw shaft (26), which axial end portion serves as an attachment portion (26c).

2. The injection molding machine according to claim 1,
wherein the rotation prevention portion (26d) includes a recessed portion to which a rotation prevention tool (80) is hooked.

3. The injection molding machine according to claim 1 or 2,
wherein the rotation prevention portion (26d) includes a recessed portion to which an adaptor member (81A) to which the rotation prevention tool (80) is hooked is attached.

## Patentansprüche

1. Spritzgießmaschine, umfassend:
einen Motor und
einen Bewegungsumwandlungsmechanismus (22), der eine Drehbewegung des Motors in eine lineare Bewegung umwandelt,
wobei der Bewegungsumwandlungsmechanismus (22) eine Kugelumlaufspindelwelle (26) und eine Kugelumlaufspindelmutter (27), die auf die Kugelumlaufspindelwelle (26) geschraubt ist, umfasst,
wobei die Kugelumlaufspindelwelle (26) durch den Motor gedreht wird,
**dadurch gekennzeichnet, dass** die Kugelumlaufspindelwelle (26) einen Drehverhinderungsabschnitt (26d) umfasst, der einen ausgesparten Abschnitt umfasst und der dafür konfiguriert ist, verwendet zu werden, um eine Drehung der Kugelumlaufspindelwelle (26) zu verhindern, wenn der Bewegungsumwandlungsmechanismus zusammengebaut wird,
wobei der Drehverhinderungsabschnitt (26d) an einer axialen Endfläche eines axialen Endabschnitts der Kugelumlaufspindelwelle (26) angeordnet ist, wobei der axiale Endabschnitt als ein Befestigungsabschnitt (26c) dient.

2. Spritzgießmaschine nach Anspruch 1,
wobei der Drehverhinderungsabschnitt (26d) einen ausgesparten Abschnitt umfasst, an dem ein Drehverhinderungswerkzeug (80) eingehakt wird.

3. Spritzgießmaschine nach Anspruch 1 oder 2,
wobei der Drehverhinderungsabschnitt (26d) einen ausgesparten Abschnitt umfasst, an dem ein Adapterelement (81A) befestigt ist, an dem das Drehverhinderungswerkzeug (80) eingehakt wird.

## Revendications

1. Une machine de moulage par injection comprenant :
un moteur ; et
un mécanisme de conversion de mouvement (22) qui convertit le mouvement de rotation du moteur en mouvement linéaire,
dans laquelle le mécanisme de conversion de mouvement (22) comprend une tige de vis sphérique (26) et un écrou de vis sphérique (27) qui est vissé sur la tige de vis sphérique (26),
dans laquelle la tige de vis sphérique (26) est entraînée en rotation par le moteur ;
**caractérisée en ce que** la tige de vis sphérique (26) comprend une partie anti-rotation (26d) qui comprend une partie évidée et qui est configurée pour être utilisée afin d'empêcher la rotation de la tige de vis sphérique (26) lorsque le mécanisme de conversion de mouvement est assemblé,
dans laquelle la partie anti-rotation (26d) est positionnée sur une surface d'extrémité axiale d'une partie d'extrémité axiale de la tige de vis sphérique (26), laquelle partie d'extrémité axiale sert de partie de fixation (26c).

2. La machine de moulage par injection selon la revendication 1,
dans laquelle la partie anti-rotation (26d) comprend une partie évidée à laquelle un outil anti-rotation (80) est accroché.

3. La machine de moulage par injection selon la revendication 1 ou 2,
dans laquelle la partie anti-rotation (26d) comprend une partie évidée à laquelle un élément d'adaptateur (81A) auquel l'outil anti-rotation (80) est accroché, est fixé.
